# EUROPEAN PATENT APPLICATION

(11) **EP 4 629 432 A1**
(43) Date of publication of application: **08.10.2025**
(21) Application number: 24218059.4
(22) Date of filing: 06.12.2024
(51) Int. Cl.: H01M 50/586, H01M 10/0587, H01M 50/107, H01M 50/342, H01M 50/528, H01M 50/531, H01M 50/553, H01M 50/595

(54) **SECONDARY BATTERY**

(30) Priority: 31.01.2024 KR 20240014692
(71) Applicant: SAMSUNG SDI CO., LTD., Yongin-si, Gyeonggi-do 17084 (KR)
(72) Inventor: JEONG, Yong Hoon, 17084 Yongin-si (KR)
(74) Representative: Marks & Clerk LLP

(57) **Abstract**

A secondary battery includes an electrode assembly including a negative electrode plate including a negative electrode leading end uncoated portion, a positive electrode plate including a positive electrode leading end uncoated portion, and an anti-deformation portion attached to the positive electrode leading end uncoated portion, an end of the positive electrode leading end uncoated portion and an end of the anti-deformation portion being located ahead of an end of the negative electrode leading end uncoated portion, a case accommodating the electrode assembly, and electrically coupled to the negative electrode plate, and a cap assembly sealing the case.

## Description

### BACKGROUND

### 1. Field

Embodiments relate to a secondary battery.

### 2. Description of the Related Art

Lithium-ion secondary batteries are being used, for example, to power hybrid or electric vehicles as well as portable electronics, due to their relatively high operating voltage and high specific energy. Based on the shape thereof, secondary batteries may be classified into a cylindrical secondary battery, a prismatic secondary battery, and a pouch-shaped secondary battery. For example, the cylindrical secondary battery may generally include a cylindrical case, a columnar electrode assembly coupled to the case, an (optional) electrolyte solution injected into the case to allow for the movement of lithium ions, and a cap plate coupled to one side of the case to reduce or prevent leakage of the electrolyte solution, and to reduce or prevent the likelihood of separation of the electrode assembly.

The information disclosed in this section is provided only for enhancement of understanding of the background of the disclosure, and may contain information that does not form the prior art.

### SUMMARY

Embodiments provide a secondary battery configured such that deformation of a core of an electrode assembly is reduced or prevented, thereby reducing or preventing the likelihood of electrical short circuit in the core of the electrode assembly.

A secondary battery according to one or more embodiments includes an electrode assembly including a negative electrode plate including a negative electrode leading end uncoated portion, a positive electrode plate including a positive electrode leading end uncoated portion, and an anti-deformation portion attached to the positive electrode leading end uncoated portion, an end of the positive electrode leading end uncoated portion and an end of the anti-deformation portion being located ahead of an end of the negative electrode leading end uncoated portion, a case accommodating the electrode assembly, and electrically coupled to the negative electrode plate, and a cap assembly sealing the case.

The end of the positive electrode leading end uncoated portion and the end of the anti-deformation portion may be coplanar.

The positive electrode leading end uncoated portion may include an extension portion extending from the end of the anti-deformation portion.

The secondary battery may further include at least three layers of separators between the extension portion and the negative electrode plate.

A length of the anti-deformation portion may be about 1/3 to about 2/3 of a circumferential length of a core of the electrode assembly.

The anti-deformation portion may be attached to a front surface and to a rear surface of the positive electrode leading end uncoated portion.

The positive electrode plate may include at least two positive electrode tabs coupled between the positive electrode leading end uncoated portion and a positive electrode trailing end uncoated portion.

The cap assembly may include a cap plate electrically coupled to the case, and a rivet terminal passing through, and insulated from, the cap plate, and electrically coupled to the at least two positive electrode tabs.

The negative electrode plate may include at least one negative electrode tab coupled between the negative electrode leading end uncoated portion and a negative electrode trailing end uncoated portion.

The at least one negative electrode tab may be electrically coupled to the case.

The negative electrode trailing end uncoated portion may be directly coupled to the case.

The anti-deformation portion may be outside the negative electrode leading end uncoated portion in a core of the electrode assembly.

The positive electrode plate may include a positive electrode current collector including the positive electrode leading end uncoated portion, and a positive electrode active material on the positive electrode current collector and attached to the anti-deformation portion.

The negative electrode plate may include a negative electrode current collector including the negative electrode leading end uncoated portion, and a negative electrode active material on the negative electrode current collector, wherein the anti-deformation portion is outside the negative electrode active material.

The cap assembly may include a cap-up coupled to the case, a safety vent coupled to the cap-up, and a cap-down coupled to the safety vent and electrically coupled to the at least two positive electrode tabs.

At least some of the above and other features of the invention are set out in the claims.

### BRIEF DESCRIPTION OF THE DRAWINGS

The accompanying drawings, which are incorporated in this specification, illustrate embodiments, and serve to further illustrate the technical ideas of the disclosure in conjunction with the detailed description of embodiments that follows, and the disclosure is not to be construed as limited to what is shown in such drawings. In the drawings:
FIGS. 1A and 1B are respectively a perspective view and a sectional view showing a secondary battery according to one or more embodiments;
FIG. 2 is a plan view showing the unfolded structure (structure before winding) of an electrode assembly according to one or more embodiments;
FIG. 3A is a sectional view showing the unfolded structure (structure before winding) of a positive electrode plate of the electrode assembly according to one or more embodiments;
FIG. 3B is a sectional view showing the core structure (leading end structure after winding) of the electrode assembly according to one or more embodiments;
FIG. 4A is a sectional view showing the unfolded structure (structure before winding) of a positive electrode plate according to one or more embodiments;
FIG. 4B is a sectional view showing the core structure (leading end structure after winding) of the electrode assembly according to one or more embodiments; and
FIG. 5 is a sectional view of a secondary battery according to one or more other embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure. The present disclosure covers all modifications, equivalents, and replacements within the idea and technical scope of the present disclosure. Further, each of the features of the various embodiments of the present disclosure may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the terms "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5% of a corresponding value. "About" or "approximately," as used herein, are inclusive of the stated value and mean within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

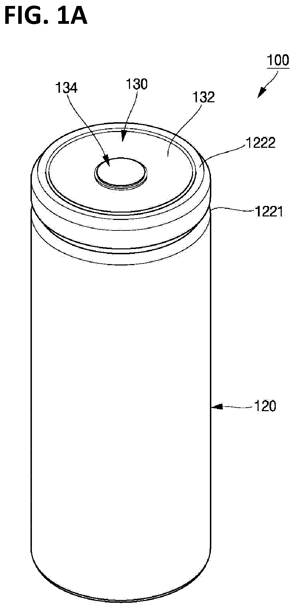

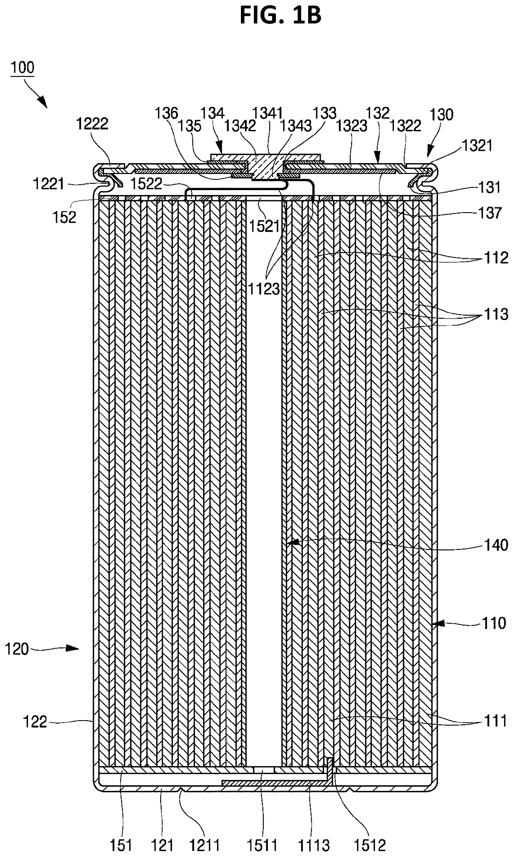

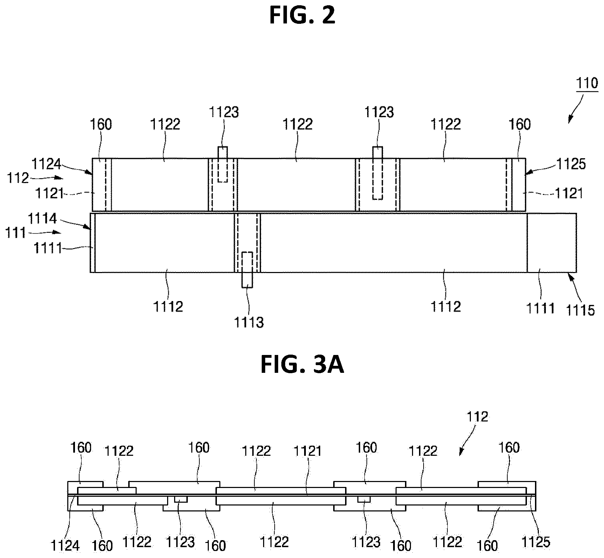

FIGS. 1A and 1B are respectively a perspective view and a sectional view showing a secondary battery 100 according to one or more embodiments. FIG. 2 is a plan view showing the unfolded structure (structure before winding) of an electrode assembly 110 according to one or more embodiments. The secondary battery 100 shown in FIGS. 1A and 1B and/or FIG. 2 is only an example for understanding the disclosure, and aspects thereof may be applied to other types of secondary batteries. Referring to FIGS. 1A and 1B, a secondary battery 100 may include an electrode assembly 110, a case 120, and a cap assembly 130.

The electrode assembly 110 may be wound into a columnar shape. The electrode assembly 110 may include, or may be referred to as, an electrode, an electrode group, or a jelly roll. The electrode assembly 110 may include a negative electrode plate 111, a positive electrode plate 112, and a separator 113 interposed between the negative electrode plate 111 and the positive electrode plate 112.

Referring to FIG. 2, the negative electrode plate 111 may be formed by coating a negative electrode current collector 1111 with a negative electrode active material 1112 (e.g., graphite or carbon), and the positive electrode plate 112 may be formed by coating a positive electrode current collector 1121 with a positive electrode active material 1122 (e.g., transition metal oxide (LiCoO₂, LiNiO₂, or LiMn₂O₄)). The separator 113 may be interposed between the negative electrode plate 111 and the positive electrode plate 112 to reduce or prevent the likelihood of short circuit between the positive electrode plate 112 and the negative electrode plate 111, and to allow only movement of lithium ions.

A separator 113, a negative electrode plate 111, a separator 113, and a positive electrode plate 112 may be sequentially stacked and wound into a roughly columnar shape to form the electrode assembly 110. In one or more embodiments, the negative electrode current collector 1111 may include copper, a copper alloy, nickel, or a nickel alloy. The positive electrode current collector 1121 may include aluminium or an aluminium alloy. The separator 113 may include polyethylene (PE) or polypropylene (PP). In one or more embodiments, the secondary battery 100 may further include an (optional) center pin 140 coupled to a core of the electrode assembly 110.

In one or more embodiments, the negative electrode plate 111 may further include at least one negative electrode tab 1113 coupled to the negative electrode current collector 1111, and protruding and extending downwardly therefrom. In one or more embodiments, the positive electrode plate 112 may further include at least two positive electrode tabs 1123 coupled to the positive electrode current collector 1121, and protruding and extending upwardly therefrom by a length (e.g., by a predetermined length). In one or more embodiments, the negative electrode tab 1113 may include copper, a copper alloy, nickel, or a nickel alloy. In one or more embodiments, the positive electrode tab 1123 may include aluminium or an aluminium alloy.

In one or more embodiments, one negative electrode tab 1113 may be welded to a bottom portion 121 of the cylindrical case 120. The cylindrical case 120 may serve as a negative electrode. Alternatively, the positive electrode tab 1123 may be welded to the bottom portion 121 of the cylindrical case 120, in which case the cylindrical case 120 may serve as a positive electrode. In one or more embodiments, the two positive electrode tabs 1123 may be welded to a rivet terminal 134 constituting the cap assembly 130. The rivet terminal 134 may serve as a positive electrode. Alternatively, in one or more embodiments, the negative electrode tab 1113 may be welded to the rivet terminal 134, in which case the rivet terminal 134 may serve as a negative electrode.

The cylindrical case 120 may include a roughly circular bottom portion 121, and a sidewall 122 extending upwardly from the bottom portion 121. In one or more embodiments, the case 120 may include, or may be referred to as, a can, a cladding, or a housing. During the process of manufacturing the secondary battery 100, the top of the cylindrical case 120 may be opened. During the process of assembling the secondary battery 100, the electrode assembly 110 may be integrated into a single structure, and may be inserted into the cylindrical case 120. Subsequently, an (optional) electrolytic solution may be injected into the cylindrical case 120. The cylindrical case 120 may be made of steel, a steel alloy, nickel-plated steel, a nickel-plated steel alloy, aluminium, or an aluminium alloy. In one or more embodiments, the cylindrical case 120 may be provided with an inwardly recessed beading portion 1221 under the cap assembly 130 and an inwardly bent crimping portion 1222 above the cap assembly 130 to reduce or prevent the likelihood of separation of the electrode assembly 110 to the outside.

In one or more embodiments, a safety vent 1211 may be provided at the bottom portion 121 of the cylindrical case 120. In one or more embodiments, the safety vent 1211 may be provided in the form of a roughly circular ring or in a C-shape. In one or more embodiments, the safety vent 1211 may include, or may be referred to as, a notch, a recess, or a groove.

In one or more embodiments, a first insulating plate 151 coupled to the cylindrical case 120, and having/defining a first hole 1511 formed in the center and a second hole 1512 formed outside the first hole, may be interposed between the electrode assembly 110 and the bottom portion 121. In one or more embodiments, the first insulating plate 151 may reduce or prevent the likelihood of the electrode assembly 110 electrically contacting the bottom portion 121 of the cylindrical case 120. In one or more embodiments, the first insulating plate 151 may reduce or prevent the likelihood of the positive electrode plate 112 of the electrode assembly 110 coming into electrical contact with the bottom portion 121.

In one or more embodiments, if a large amount of gas is generated by abnormality of the secondary battery 100, the first hole 1511 may allow the gas to quickly move upwardly through the core or the center pin 140 of the electrode assembly 110, and the second hole 1512 may allow the negative electrode tab 1113 to extend therethrough so as to be welded to the bottom portion 121.

In one or more embodiments, a second insulating plate 152 coupled to the cylindrical case 120, and having/defining a first hole 1521 formed in the center and a plurality of second holes 1522 formed outside the first hole, may be interposed between the electrode assembly 110 and the cap assembly 130. In one or more embodiments, the second insulating plate 152 may reduce or prevent the likelihood of the electrode assembly 110 electrically contacting the cap assembly 130. In one or more embodiments, the second insulating plate 152 may reduce or prevent the likelihood of the positive electrode plate 112 and/or the negative electrode plate 111 of the electrode assembly 110 electrically contacting the cap plate 132.

In one or more embodiments, if a large amount of gas is generated by abnormality of the secondary battery 100, the first hole 1521 may allow the gas to quickly move to the cap assembly 130, and the second hole 1522 may allow one positive electrode tab 1123 to extend therethrough so as to be welded to the cap assembly 130 (e.g., the rivet terminal 134). The other second hole 1522 may allow the electrolytic solution to rapidly flow into the electrode assembly 110 during the process of injecting the electrolytic solution.

The cap assembly 130 may include a first insulating gasket 131, a cap plate 132, a second insulating gasket 133, and a rivet terminal 134. In one or more embodiments, the cap plate 132 may further include an upper insulator 135, a lower insulator 136, and an inner insulator 137. In one or more embodiments, the cap assembly 130 may include, or may be referred to as, a cap, a cap group, a lid, a cover, or a top.

The first insulating gasket 131 may be interposed between the beading portion 1221 and the crimping portion 1222 provided at the case 120. In one or more embodiments, an upper end of the first insulating gasket 131 may be located between the beading portion 1221 and the crimping portion 1222, and a lower end of the first insulating gasket 131 may be located inside the beading portion 1221. In one or more embodiments, the first insulating gasket 131 may include an insulator that does not react with an electrolytic solution. In one or more embodiments, the first insulating gasket 131 may include polypropylene (PP), polyethylene (PE), ethylene propylene diene monomer (EPDM), or nitrile butadiene rubber (NBR). The first insulating gasket 131 may isolate the inside of the case 120 from the outside to reduce or prevent the likelihood of the electrolytic solution in the case 120 leaking to the outside, and/or to reduce or prevent the likelihood of external foreign matter (e.g., moisture or dust) entering the case 120.

The cap plate 132 may be coupled and fixed between the beading portion 1221 and the crimping portion 1222, while the first insulating gasket 131 is interposed therebetween. In one or more embodiments, the cap plate 132 may include a cap plate circumference region 1321, a cap plate slope region 1322, and a cap plate center region 1323.

The cap plate center region 1323 may include a terminal hole through which the second insulating gasket 133 and the rivet terminal 134 are coupled to each other. In one or more embodiments, the cap plate 132 may include aluminium, an aluminium alloy, copper, a copper alloy, nickel, a nickel alloy, iron, or an iron alloy. In one or more embodiments, the cap plate 132 may include, or may be referred to as, a cap, a cap-up, a plate, a cover, a lid, or a top.

The cap plate circumference region 1321 may be coupled between the beading portion 1221 and the crimping portion 1222. In one or more embodiments, a side surface and an inner surface (lower surface) of the cap plate circumference region 1321 may be in tight contact with the first insulating gasket 131, and an outer surface (upper surface) of the cap plate circumference region 1321 may be in tight contact with the crimping portion 1222. In one or more embodiments, the outer surface of the cap plate circumference region 1321 may be electrically connected to an inner surface of the crimping portion 1222. The case 120 and the cap plate 132 may have the same polarity.

The cap plate slope region 1322 may extend from the cap plate circumference region 1321, and may be inclined upward. The cap plate slope region 1322 may interconnect the cap plate circumference region 1321 and the cap plate center region 1323.

The cap plate center region 1323 may extend from the cap plate slope region 1322. The cap plate center region 1323 may include a relatively flat outer surface (upper surface) and a relatively flat inner surface (lower surface), which is opposite to the outer surface. The terminal hole may be formed through the cap plate center region 1323. In one or more embodiments, the outer surface of the crimping portion 1222 and the outer surface of the cap plate center region 1323 may form the same plane.

The second insulating gasket 133 may be coupled to the terminal hole. In one or more embodiments, the second insulating gasket 133 may cover an inner wall of the terminal hole, a part of the outer surface of the cap plate center region 1323, and a part of the inner surface of the cap plate center region 1323. The material of the second insulating gasket 133 may be similar to the material of the first insulating gasket 131. The second insulating gasket 133 may include, or may be referred to as, a sealing gasket or a sealing insulator.

The rivet terminal 134 may be coupled through the second insulating gasket 133. The rivet terminal 134 may be coupled through the terminal hole in the cap plate 132. In one or more embodiments, the rivet terminal 134 may include a rivet head 1341 located on the outer surface of the cap plate 132, a rivet body 1342 located in the terminal hole, and a rivet leg 1343 located on or near the inner surface of the cap plate 132. In one or more embodiments, the rivet head 1341, the rivet body 1342, and the rivet leg 1343 may be integrated, and may have an approximately T-shaped section. In one or more embodiments, the rivet terminal 134 may include aluminium, an aluminium alloy, copper, a copper alloy, nickel, a nickel alloy, iron, or an iron alloy.

The positive electrode tab 1123 may be electrically connected to the rivet leg 1343 of the rivet terminal 134. In one or more embodiments, the positive electrode tab 1123 may be welded to the rivet leg 1343. The rivet terminal 134 may have the characteristics of a positive electrode. In one or more embodiments, the cap plate 132 may serve as a negative electrode terminal, and the rivet terminal 134 may serve as a positive electrode terminal.

As the cap plate 132 may be electrically connected to the crimping portion 1222 of the case 120, the cap plate 132 may have the characteristics of a negative electrode. As the rivet terminal 134 is electrically connected to the positive electrode tab 1123, the rivet terminal 134 may have the characteristics of a positive electrode. Two terminals (a positive electrode terminal and a negative electrode terminal) may be provided at the upper region of the secondary battery 100.

The upper insulator 135 may be provided between the rivet terminal 134 and the cap plate 132. In one or more embodiments, the upper insulator 135 may be interposed between the rivet head 1341 and the cap plate center region 1323.

The lower insulator 136 may be interposed between the rivet body 1342 and/or rivet leg 1343 and the cap plate center region 1323. In one or more embodiments, the lower insulator 136 may be interposed between the rivet legs 1343 and the second insulating gasket 133 and/or the inner insulator 137.

The inner insulator 137 may be provided at the inner surface of the cap plate 132. In one or more embodiments, the inner insulator 137 may be provided at the cap plate center region 1323. In one or more embodiments, the inner insulator 137 may be provided at the inner surface of the cap plate center region 1323. In one or more embodiments, the inner insulator 137 may be provided from the terminal hole, which is at the cap plate center region 1323, to the cap plate slope region 1322.

Referring to FIG. 2, for convenience of description, the depiction of a separator 113 interposed between a positive electrode plate 112 and a negative electrode plate 111 is omitted. Referring to FIG. 2, the electrode assembly 110 includes a negative electrode plate 111, a positive electrode plate 112, and an anti-deformation portion 160.

The negative electrode plate 111 may include a negative electrode leading end uncoated portion 1114 and a negative electrode trailing end uncoated portion 1115. In one or more embodiments, the negative electrode leading end uncoated portion 1114 may be a region of the negative electrode plate 111 where winding begins, and may be a region of the negative electrode current collector 1111 that is not coated with the negative electrode active material 1112. In one or more embodiments, the negative electrode trailing end uncoated portion 1115 may be a region of the negative electrode plate 111 where winding ends, and may be a region of the negative electrode current collector 1111 that is not coated with the negative electrode active material 1112. In one or more embodiments, the length of the negative electrode plate 111 may be greater than the length of the positive electrode plate 112, whereby the negative electrode trailing end uncoated portion 1115 may be located at the outermost side of the electrode assembly 110 after winding.

The negative electrode trailing end uncoated portion 1115 located at the outermost side of the electrode assembly 110 may be in direct contact with and coupled to the sidewall 122 of the case 120. As described above, the single negative electrode tab 1113 may be coupled to, and may extend downwardly from, the negative electrode current collector 1111 at any location between the negative electrode leading end uncoated portion 1114 and the negative electrode trailing end uncoated portion 1115.

The positive electrode plate 112 may include a positive electrode leading end uncoated portion 1124 and a positive electrode trailing end uncoated portion 1125. In one or more embodiments, the positive electrode leading end uncoated portion 1124 may be a region of the positive electrode plate 112 where winding begins, and may be a region of the positive electrode current collector 1121 that is not coated with the positive electrode active material 1122.

In one or more embodiments, the positive electrode trailing end uncoated portion 1125 may be a region of the positive electrode plate 112 where winding ends, and may be a region of the positive electrode current collector 1121 that is not coated with the positive electrode active material 1122. As described above, the two positive electrode tabs 1123 may be coupled to, and may extend upwardly from, the positive electrode current collector 1121 at any location between the positive electrode leading end uncoated portion 1124 and the positive electrode trailing end uncoated portion 1125.

The anti-deformation portion 160 is attached to the positive electrode leading end uncoated portion 1124. The anti-deformation portion 160 may include, or may be referred to as, an anti-deformation tape, an anti-deformation film, an insulating tape, or an insulating film. In one or more embodiments, a part of the anti-deformation portion 160 may also be attached to the positive electrode active material 1122 adjacent to the positive electrode leading end uncoated portion 1124. In one or more embodiments, the anti-deformation portion 160 may also be attached to the positive electrode trailing end uncoated portion 1125. In one or more embodiments, a part of the anti-deformation portion 160 may also be attached to the positive electrode active material 1122 adjacent to the positive electrode trailing end uncoated portion 1125. The anti-deformation portion 160 may include PP, PE, EPDM, or NBR, which does not react with the electrolytic solution. The anti-deformation portion 160 attached to the positive electrode leading end uncoated portion 1124 may reduce or prevent deformation of the core of the electrode assembly 110.

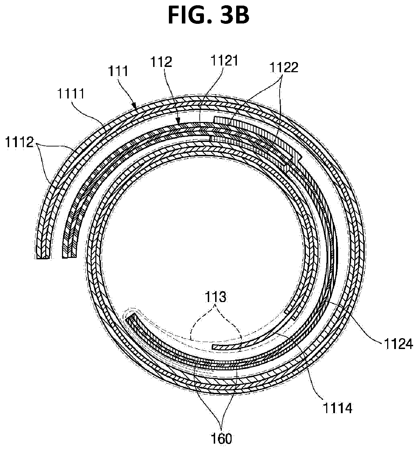

FIG. 3A is a sectional view showing the unfolded structure (structure before winding) of the positive electrode plate 112 of the electrode assembly 110, and FIG. 3B is a sectional view showing the core structure (leading end structure after winding) of the electrode assembly 110. The core structure of the electrode assembly 110 may be the portion of the electrode assembly 110 where winding of the negative electrode plate 111 and positive electrode plate 112 begins, and may refer to a hollow space provided at the approximate center of the electrode assembly 110, and the surroundings thereof.

Referring to FIGS. 3A and 3B, each of a front surface and a rear surface of the positive electrode current collector 1121 may be coated with the positive electrode active material 1122. Each of a front surface and a rear surface of the negative electrode current collector 1111 may be coated with the negative electrode active material 1112.

In one or more embodiments, the anti-deformation portion 160 may be attached to a front surface and/or a rear surface of the positive electrode leading end uncoated portion 1124. In one or more embodiments, the anti-deformation portion 160 may be attached to a front surface and/or a rear surface of the positive electrode trailing end uncoated portion 1125. In one or more embodiments, the two positive electrode tabs 1123 may be attached to the front surface of the positive electrode current collector 1121, and the rear surface of the positive electrode current collector 1121 corresponding thereto may not be coated with the positive electrode active material 1122. In one or more embodiments, the anti-deformation portion 160 may be attached to each of the front surface of the positive electrode current collector 1121, to which the two positive electrode tabs 1123 are attached, and the rear surface of the positive electrode current collector 1121 corresponding thereto. In one or more embodiments, the end of the positive electrode leading end uncoated portion 1124 and the end of the anti-deformation portion 160 may form the same plane, or may be coplanar. In one or more embodiments, the end of the positive electrode trailing end uncoated portion 1125 and the end of the anti-deformation portion 160 may also form the same plane.

Referring to FIG. 3B, the end of the positive electrode leading end uncoated portion 1124 and the end of the anti-deformation portion 160 are located ahead of the end of the negative electrode leading end uncoated portion 1114. In one or more embodiments, the end of the positive electrode leading end uncoated portion 1124 and the end of the anti-deformation portion 160 may be located in a state of extending more than the negative electrode leading end uncoated portion 1114 in the core structure of the electrode assembly 110.

In one or more embodiments, the length of the anti-deformation portion 160 may be about 1/3 to about 2/3 of the circumferential length of the core of the electrode assembly 110. If the length of the anti-deformation portion 160 is less than about 1/3 of the circumferential length of the core, the core of the electrode assembly 110 may be deformed during the charge and discharge operation of the secondary battery 100. If the length of the anti-deformation portion 160 is greater than about 2/3 of the circumferential length of the core, deformation of the core of the electrode assembly 110 may be reduced or prevented during the charge and discharge operation of the secondary battery 100, but the overlap area between the positive electrode plate 112 and the negative electrode plate 111 may be excessively reduced, whereby the battery capacity may be reduced.

In one or more embodiments, the anti-deformation portion 160 may be located outside the negative electrode leading end uncoated portion 1114 in the core of the electrode assembly 110. In one or more embodiments, the core of the electrode assembly 110 may be formed by winding the negative electrode plate 111 having the negative electrode leading end uncoated portion 1114 once inside, and winding the positive electrode plate 112 having the anti-deformation portion 160 attached thereto once outside, the negative electrode plate 111.

Referring to FIG. 3B, two separators 113 may be wound together with the positive electrode plate 112 in a state of being in tight contact with the front surface and the rear surface of the negative electrode plate 111. The separators 113 may be interposed between the negative electrode leading end uncoated portion 1114 and the anti-deformation portion 160, whereby no electrical short circuit may occur between the negative electrode leading end uncoated portion 1114 and the positive electrode leading end uncoated portion 1124.

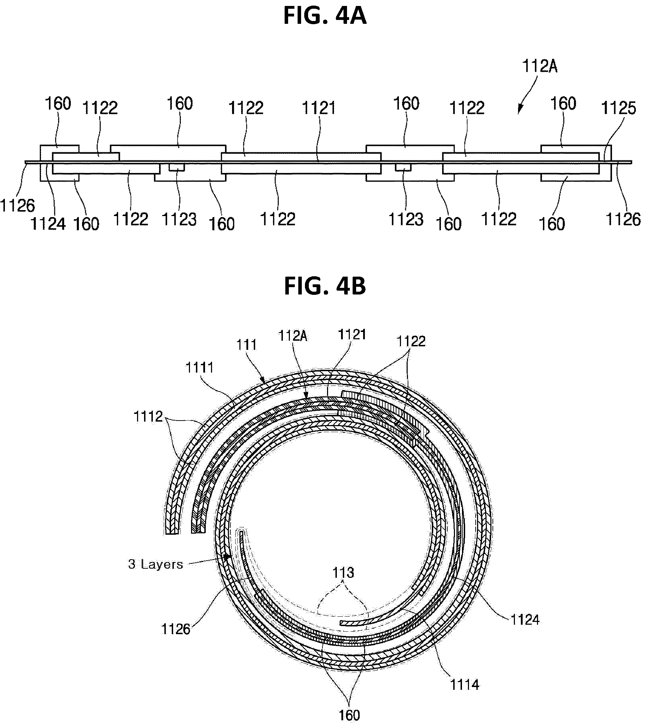

FIG. 4A is a sectional view showing the unfolded structure (structure before winding) of a positive electrode plate 112A of the electrode assembly 110, and FIG. 4B is a sectional view showing the core structure (leading end structure after winding) of the electrode assembly 110. The positive electrode plate 112A shown in FIGS. 4A and 4B may be similar to the positive electrode plate 112 shown in FIGS. 3A and 3B, except that an extension portion 1126 is provided at the positive electrode leading end uncoated portion 1124.

Referring to FIGS. 4A and 4B, the positive electrode leading end uncoated portion 1124 may further include an extension portion 1126 extending from the end of the anti-deformation portion 160. In one or more embodiments, the extension portion 1126 may be a further extension of the positive electrode leading end uncoated portion 1124 of the positive electrode current collector 1121 that is not coated with the positive electrode active material 1122. In one or more embodiments, the length of the extension portion 1126 extending from the positive electrode leading end uncoated portion 1124 can be from about 1.5 mm to about 3.5 mm. In one or more embodiments, the extension portion 1126 may also be provided at the positive electrode trailing end uncoated portion 1125. In one or more embodiments, the extension portion 1126 may extend from the end of the anti-deformation portion 160 covering the positive electrode trailing end uncoated portion 1125.

Referring to FIG. 4B, the extension portion 1126 of the positive electrode leading end uncoated portion 1124 may be located ahead of the end of the negative electrode leading end uncoated portion 1114. In one or more embodiments, the extension portion 1126 of the positive electrode leading end uncoated portion 1124 and the anti-deformation portion 160 may be located in a state of extending more than the negative electrode leading end uncoated portion 1114 in the core structure of the electrode assembly 110.

Referring to FIG. 4B, two separators 113 may be wound together with the positive electrode plate 112 in a state of being in tight contact with the front surface and the rear surface of the negative electrode plate 111. In one or more embodiments, the two separators 113 may be bent while covering the extension portion 1126 of the positive electrode leading end uncoated portion 1124 to cover the front surface and the rear surface of the negative electrode plate 111. Three layers of the separators 113 may be interposed between the extension portion 1126 of the positive electrode leading end uncoated portion 1124 and the negative electrode plate 111 adjacent thereto. The likelihood of an electrical short circuit between the extension portion 1126 and the negative electrode plate 111 may be reduced or prevented by the three layers of separators 113.

As described above, the anti-deformation portion 160 may be attached to the front surface and/or the rear surface of the positive electrode leading end uncoated portion 1124 located in the core of the electrode assembly 110, whereby deformation of the core of the electrode assembly 110 is reduced or prevented, and it is possible to provide a cylindrical secondary battery 100 configured such that the likelihood of an electrical short circuit in the core of the electrode assembly 110 is reduced or prevented.

The electrode assembly 110 having the anti-deformation portion 160 may be applied not only to the cylindrical secondary battery 100 of the type described above, but also to various other cylindrical secondary batteries. For example, the electrode assembly 110 may be applied to a secondary battery 200 having a general cap-up and cap-down structure, in addition to the cylindrical secondary battery 100 having the rivet terminal 134 shown in FIGS. 1A and 1B.

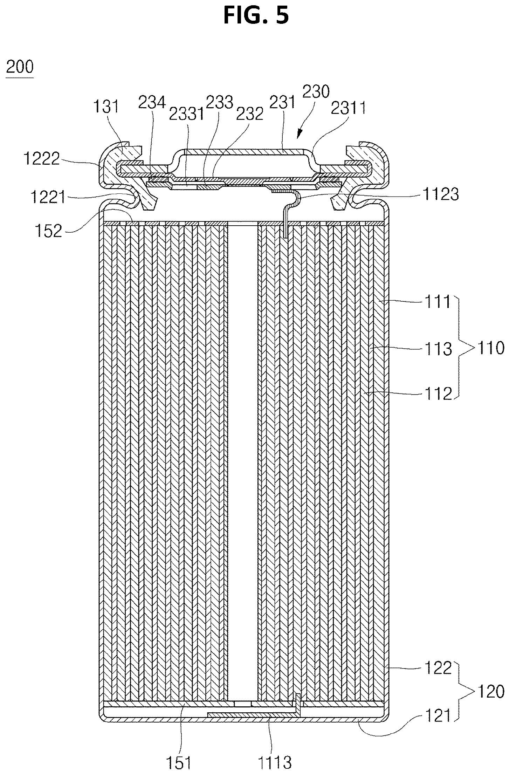

FIG. 5 is a sectional view of a secondary battery 200 according to one or more other embodiments. Referring to FIG. 5, the secondary battery 200 may be configured such that a first insulating gasket 131 is fitted between a beading portion 1221 and a crimping portion 1222, and a cap assembly 230 is coupled to the first insulating gasket 131.

The cap assembly 230 may include a cap-up 231 having at least one opening 2311, may include a safety vent 232 coupled to a lower part of the cap-up 231 so as to wrap a part of a lower surface, a side surface, and a part of an upper surface of the cap-up 231, and may include a cap-down 233 coupled to a lower side of the safety vent 232. The cap-down 233 may be electrically connected to a positive electrode tab 1123, and may have/define at least one opening 2331.

An insulating ring 234 may be interposed between the safety vent 232 and the cap-down 233. If the internal pressure of the secondary battery 200 is greater than a first reference pressure, the pressure through the opening 2331 of the cap-down 233 may push the safety vent 232 upwardly, thereby blocking an electrical path between the safety vent 232 and the cap-down 233. If the internal pressure of the secondary battery 200 is greater than a second reference pressure greater than the first reference pressure, the safety vent 232 may be torn, whereby the gas in the battery may be discharged outwardly through the opening 2311 of the cap-up 231. An electrode assembly 110 of the secondary battery 200 may be the same or similar to that shown in FIGS. 1B to 4B.

As is apparent from the above description, embodiments may provide a cylindrical secondary battery configured such that an anti-deformation portion (e.g., insulating tape) is attached to a front surface and/or a rear surface of a positive electrode leading end uncoated portion located at a core of an electrode assembly, deformation of the core of the electrode assembly is reduced or prevented, and it may be possible to reduce or prevent the likelihood of an electrical short circuit in the core of the electrode assembly.

The above are only examples for implementing a secondary battery according to the disclosure, the disclosure is not limited to the above embodiments, and there is a technical idea of the disclosure to the extent that various modifications can be made by anyone having ordinary skill in the art to which the disclosure pertains without departing from the gist of the disclosure as claimed in the following claims, with functional equivalents thereof to be included therein.

## Claims

1. A secondary battery comprising:
an electrode assembly comprising:
a negative electrode plate comprising a negative electrode leading end uncoated portion;
a positive electrode plate comprising a positive electrode leading end uncoated portion; and
an anti-deformation portion attached to the positive electrode leading end uncoated portion, an end of the positive electrode leading end uncoated portion and an end of the anti-deformation portion being located ahead of an end of the negative electrode leading end uncoated portion;
a case accommodating the electrode assembly, and electrically coupled to the negative electrode plate; and
a cap assembly sealing the case.

2. The secondary battery as claimed in claim 1, wherein the end of the positive electrode leading end uncoated portion and the end of the anti-deformation portion are coplanar.

3. The secondary battery as claimed in claim 1, wherein the positive electrode leading end uncoated portion comprises an extension portion extending from the end of the anti-deformation portion.

4. The secondary battery as claimed in claim 3, further comprising at least three layers of separators between the extension portion and the negative electrode plate.

5. The secondary battery as claimed in any one of claims 1 to 4, wherein a length of the anti-deformation portion is about 1/3 to about 2/3 of a circumferential length of a core of the electrode assembly.

6. The secondary battery as claimed in any one of claims 1 to 5, wherein the anti-deformation portion is attached to a front surface and to a rear surface of the positive electrode leading end uncoated portion.

7. The secondary battery as claimed in any one of claims 1 to 6, wherein the positive electrode plate comprises at least two positive electrode tabs coupled between the positive electrode leading end uncoated portion and a positive electrode trailing end uncoated portion.

8. The secondary battery as claimed in claim 7, wherein the cap assembly comprises:
a cap plate electrically coupled to the case; and
a rivet terminal passing through, and insulated from, the cap plate, and electrically coupled to the at least two positive electrode tabs.

9. The secondary battery as claimed in any one of claims 1 to 8, wherein the negative electrode plate comprises at least one negative electrode tab coupled between the negative electrode leading end uncoated portion and a negative electrode trailing end uncoated portion.

10. The secondary battery as claimed in claim 9, wherein the at least one negative electrode tab is electrically coupled to the case.

11. The secondary battery as claimed in claim 9 or claim 10, wherein the negative electrode trailing end uncoated portion is directly coupled to the case.

12. The secondary battery as claimed in any one of claims 1 to 11, wherein the anti-deformation portion is outside the negative electrode leading end uncoated portion in a core of the electrode assembly.

13. The secondary battery as claimed in any one of claims 1 to 12, wherein the positive electrode plate comprises a positive electrode current collector comprising the positive electrode leading end uncoated portion, and a positive electrode active material on the positive electrode current collector and attached to the anti-deformation portion.

14. The secondary battery as claimed in any one of claims 1 to 13, wherein the negative electrode plate comprises a negative electrode current collector comprising the negative electrode leading end uncoated portion, and a negative electrode active material on the negative electrode current collector, and
wherein the anti-deformation portion is outside the negative electrode active material.

15. The secondary battery as claimed in claim 7, wherein the cap assembly comprises a cap-up coupled to the case, a safety vent coupled to the cap-up, and a cap-down coupled to the safety vent and electrically coupled to the at least two positive electrode tabs.
